# EUROPÄISCHE PATENTANMELDUNG

(11) **EP 3 141 125 A1**
(43) Veröffentlichungstag der Anmeldung: **15.03.2017**
(21) Anmeldenummer: 16188085.1
(22) Anmeldetag: 09.09.2016
(51) Int. Cl.: A21C 9/08, A21B 3/07

(54) **ETAGENOFEN MIT BESCHICKUNGSSCHLITTEN**

(30) Priorität: 10.09.2015 DE 102015217319
(71) Anmelder: Daub Backtechnik GmbH, 21147 Hamburg (DE)
(72) Erfinder: FLISZAR, Günther, 21073 Hamburg (DE); OTTENBERG, Markus, 21073 Hamburg (DE); RANFT, Andreas, 44809 Bochum (DE)
(74) Vertreter: Glawe, Delfs, Moll

(57) **Zusammenfassung**

Die Erfindung betrifft einen Etagenofen (1) mit automatisierter Beschickung.

Der Etagenofen (1) umfasst mehrere übereinander angeordnete Backräume (2) mit jeweils einem durch eine vordere Backraumöffnung (4) herausziehbaren Backgutträger (10) zur Aufnahme von Teiglingen (50) und einer gegenüber der Backraumöffnung (4) angeordneten Rückwand (2), und einen Auszugslader (20) mit einem vertikal verfahrbaren Ladertisch (21) und einer daran angeordneten Horizontalfördereinheit (22) zum vollständigen Herausziehen eines Backgutträgers (10) durch die Backraumöffnung (4) eines Backraums (2) auf den Ladertisch (21) sowie zum vollständigen Einschieben eines Backgutträgers (10) von dem Ladertisch (21) durch die Backraumöffnung (4) in einen Backraum (2). Weiterhin ist eine horizontal zwischen zwei Positionen verfahrbare Beschickungsvorrichtung (30) mit einer Beladevorrichtung (32) zum Beladen eines unterhalb der Beladevorrichtung (32) angeordneten Backgutträgers (10) mit Teiglingen (50) vorgesehen, wobei die Beladevorrichtung (32) in der ersten Position der Beschickungsvorrichtung (30) zum Beladen eines auf dem Ladertisch (21) angeordneten Backgutträgers (10) über dem in einer vorgegebenen vertikalen Position befindlichen Ladertisch (21) des Auszugsladers angeordnet ist und in der zweiten Position der Beschickungsvorrichtung (30) die vertikale Verfahrbarkeit des Ladertisches (21) von der Beschickungsvorrichtung (30) unbeeinträchtigt ist.

## Beschreibung

Die Erfindung betrifft einen Etagenofen mit automatisierter Beschickung.

Etagenöfen sind die typischen Öfen, die bei der handwerklichen Herstellung von Backwaren verwendet werden. Sie umfassen mehrere übereinander angeordnete, in sich geschlossene Backkammern, die einzeln durch gesonderte Backkammertüren zugänglich sind.

Bei kleineren Etagenöfen kann die Be- und Entladung der einzelnen Backkammern manuell erfolgen. Insbesondere bei größeren Etagenöfen mit bspw. mehr als 5 Etagen, bei denen die oberen Etagen nicht mehr manuell be- und entladen werden können, sind verschiedene konstruktive Maßnahmen bekannt, die eine teil- oder vollautomatisierte Beschickung der einzelnen Backkammern ermöglichen.

Unter anderem ist bekannt, Etagenöfen mit Auszügen auszugestalten, bei denen die gesamte Backfläche einer Backkammer aus der Kammer herausgezogen und anschließend vertikal auf eine Höhe verfahren wird, auf der eine manuelle Belegung der Backfläche mit Teiglingen - insbesondere von den beiden Seiten der Backfläche - möglich ist. Anschließend wird die Backfläche wieder in die Backkammer befördert. Nachteilig an diesem Stand der Technik ist, dass eine zeitintensive manuelle Belegung der Backfläche erforderlich ist, während keine andere Backkammer be- oder entladen werden kann.

Für eine automatisierte Beschickung von Etagenöfen sind weiterhin Bedienroboter mit einem Förderband zur Aufnahme von Teiglingen bekannt. Das Förderband kann derart verfahren werden, dass es in eine Backkammer hineinragt. Wird eine entsprechende Fördergeschwindigkeit beim Herausziehen des Förderbandes aus der Backkammer gewählt, können die auf dem Förderband befindlichen Teiglinge auf der Backfläche der Backkammer abgelegt werden. Umgekehrt können fertig gebackene Backwaren nach Abschluss des Backvorgangs von dem Förderband aufgekrabbelt und aus der Backkammer entladen werden. Nachteilig an diesem Stand der Technik ist, dass nicht alle Teigwaren für das Be- und Entladen mit Förderband geeignet sind. Weiterhin kann es in den Fällen, in denen Backwaren nicht erfolgreich aufgekrabbelt werden, zu Bränden in einer Backkammer kommen.

Der Erfindung liegt die Aufgabe zugrunde, einen Etagenofen zu schaffen, bei dem die aus dem Stand der Technik bekannten Nachteile nicht mehr oder nur noch im verminderten Umfang auftreten.

Gelöst wird diese Aufgabe durch einen Etagenofen gemäß dem Hauptanspruch. Vorteilhafte Weiterbildungen sind Gegenstand der abhängigen Ansprüche.

Demnach betrifft die Erfindung einen Etagenofen umfassend mehrere übereinander angeordnete Backräume mit jeweils einem durch eine vordere Backraumöffnung herausziehbaren Backgutträger zur Aufnahme von Teiglingen und einer gegenüber der Backraumöffnung angeordneten Rückwand, und einen Auszuglader mit einem vertikal verfahrbaren Ladertisch und einer daran angeordneten Horizontalfördereinheit zum vollständigen Herausziehen eines Backgutträgers durch die Backraumöffnung eines Backraums auf den Ladertisch sowie zum vollständigen Einschieben eines Backgutträger von dem Ladertisch durch die Backraumöffnung in einen Backraum, wobei eine horizontal zwischen zwei Positionen verfahrbare Beschickungsvorrichtung mit einer Beladevorrichtung zum Beladen eines unterhalb der Beladevorrichtung angeordneten Backgutträgers mit Teiglingen vorgesehen ist, wobei die Beladungsvorrichtung in einer ersten Position der Beschickungsvorrichtung unmittelbar über einem auf dem in einer vorgegebenen vertikalen Position befindlichen Ladertisch angeordneten Backgutträgers angeordnet ist und in der zweiten Position der Beschickungsvorrichtung die vertikale Verfahrbarkeit des Ladertisches unbeeinträchtigt von der Beschickungsvorrichtung ist.

Bei dem erfindungsgemäßen Etagenofen erfolgt die letztendliche Beschickung der einzelnen Backräume nach dem aus dem Stand der Technik bekannten Prinzip, bei dem der gesamte Backgutträger mit darauf befindlichen Teiglingen oder fertig gebackenen Backwaren vollständig aus dem Backraum heraus oder in diesen hineinverfahren wird. Allerdings wird durch die Erfindung eine in diesem Zusammenhang aus dem Stand der Technik nicht bekannte automatisierte Beladung der Backgutträger mit Teiglingen ermöglicht.

Hierzu ist ausgehend von einem bekannten Etagenofen mit Auszuglader eine Beschickungsvorrichtung vorgesehen, die eine Beladevorrichtung aufweist und horizontal verfahrbar ist. Die Beladevorrichtung ist zum Beladen eines unterhalb angeordneten Backgutträgers mit Teiglingen ausgebildet.

Die Beschickungsvorrichtung lässt sich von einer zweiten Position, in der die Beschickungsvorrichtung so angeordnet ist, dass sie die vertikale Verfahrbarkeit des Ladertisches nicht beeinträchtigt, in eine erste Position verfahren, in der sich die Beladevorrichtung unmittelbar über einem auf dem Ladertisch befindlichen Backgutträger angeordnet ist. Hierfür befindet sich der Ladertisch in einer vorgegebenen vertikalen Position. Die Beladevorrichtung kann dann den Backgutträger mit Teiglingen beladen. Insbesondere kann die Beladung mit Teiglingen auch beim Verfahren der Beschickungsvorrichtung erfolgen. Anschließend wird die Beschickungsvorrichtung wieder in die erste Position verfahren und der Auszuglader kann den nunmehr mit Teiglingen beladenen Backgutträger in den Ofen einschieben.

Der erfindungsgemäße Etagenofen bietet den Vorteil, dass während der Auszugslader noch einen Backgutträger bereitstellt, die Beladevorrichtung bereits mit Teiglingen bestückt werden kann. Die eigentliche Beladung des Backgutträgers erfolgt nach seiner Bereitstellung dann automatisiert. Während der beladene Backgutträger in einen Backraum eingeschoben und ein weiterer Backgutträger bereitgestellt wird, kann die Beladevorrichtung bereits erneut mit Teiglingen bestückt werden. Das Beschicken des erfindungsgemäßen Etagenofens kann gegenüber einem Auszug-Etagenofen gemäß dem Stand der Technik also beschleunigt werden, da insbesondere die Wartezeit für die Bereitstellung eines Backgutträgers und die daran anschließende Zeit zum manuellen Bestücken des Backgutträgers mit Teiglingen wegfällt bzw. verkürzt wird.

Gleichzeitig bietet der erfindungsgemäße Etagenofen weiterhin die grundsätzliche Möglichkeit, einen auf dem Ladertisch befindlichen Backgutträger insbesondere von den beiden Seiten, an denen weder der Etagenofen selbst noch die Beschickungsvorrichtung angeordnet ist, manuell zu beladen. Dadurch lässt sich der erfindungsgemäße Etagenofen auch für solche Backwaren nutzen, deren Teiglinge nicht über die Beschickungsvorrichtung auf einen Backgutträger geladen werden können. Hierzu ist es bevorzugt, wenn der Ladertisch zu wenigstens einer Seite des Etagenofens zum manuellen Beladen eines darauf befindlichen Backgutträgers mit Teiglingen zugangsfrei ist.

Die Beschickungsvorrichtung ist vorzugsweise parallel zur Richtung, in der die Backgutträger aus einem Backraum herausgezogen werden, horizontal verfahrbar. Dadurch ist es möglich, dass die Beschickungsvorrichtung den Ladertisch in der ersten Position quer zur genannten Richtung überspannend ausgebildet ist, wobei zu beiden Seiten des Ladertisches Auflager vorgesehen sein können.

Die Beschickungsvorrichtung kann Bodenrollen aufweisen oder schienengeführt sein, wobei im letztgenannten Fall die Schienen vorzugsweise im Bodenbereich angeordnet sind. Mit den Bodenrollen kann die Beschickungsvorrichtung auf dem Boden der Backstube, in der der Etagenofen steht, horizontal verschoben werden. Vergleichbares gilt bei einer Schienenführung. Die Schienen sind dabei bevorzugt im Bodenbereich, also in der Nähe oder unmittelbar am Boden der Backstube angeordnet.

Es ist bevorzugt, wenn die Beladevorrichtung relativ zur Beschickungsvorrichtung ortsfest ist. Das bedeutet, dass für ein horizontales Verschieben der Beladevorrichtung kein gesonderter Mechanismus o.ä. vorgesehen ist, sondern die entsprechende Bewegung vielmehr allein durch ein Verfahren der Beschickungsvorrichtung als Ganzes erreicht werden kann. Dadurch kann die Beschickungsvorrichtung einfacher und kostengünstiger ausgeführt werden.

Es ist bevorzugt, wenn die Beladevorrichtung ein umlaufendes Laderband umfasst, dessen Geschwindigkeit an die relative Geschwindigkeit der Beschickungsvorrichtung gegenüber dem Ladertisch anpassbar ist. Mit einem entsprechenden Laderband können darauf befindliche Teiglinge auf dem Backgutträger abgelegt werden. Indem die Geschwindigkeit des Laderbands an die relative Geschwindigkeit des Ladertisches und damit des darauf befindlichen Backgutträgers angepasst ist, erfährt ein Teigling beim Übergang vom Laderband auf den Backgutträger keine Geschwindigkeitsänderung. Das Laderband kann auch zu den Zeiten, in denen sich kein Backgutträger in der Backgutträgeraufnahme befindet, mit Teiglingen bestückt werden.

Es ist bevorzugt, wenn an der von dem Etagenofen entfernten Seite der Beschickungsvorrichtung eine Aufgabevorrichtung zur Aufgabe von Backgut auf die Beladevorrichtung vorgesehen ist, die vorzugsweise ein umlaufendes Förderband zum Aufkrabbeln von Backwaren von einer Platte umfasst. Durch eine entsprechende Aufgabevorrichtung kann die Bestückung der Beladevorrichtung vereinfacht werden, bspw. indem der Aufgabevorrichtung Bleche o.ä. mit darauf befindlichen Teiglingen zugeführt werden, die von dort aufgekrabbelt und an die Beladevorrichtung überführt werden. Für die entsprechende Bestückung der Beladevorrichtung muss sich kein Backgutträger in der Backgutträgeraufnahme befinden. Vielmehr kann die Bestückung auch während der Zeit erfolgen, in der ein Backgutträger bereitgestellt wird.

Die am Ladertisch des Auszugsladers vorgesehene Horizontalfördereinheit umfasst vorzugsweise ein Kupplungselement, welches zur wahlweisen Kupplung mit einem in einem Backraum befindlichen Backgutträger ausgebildet ist. Das Kupplungselement ist also derart ausgebildet, dass es in einen Backraum hineinragen kann, um mit dem darin befindlichen Backgutträger wahlweise gekoppelt zu werden. "Wahlweise" bedeutet in diesem Zusammenhang, dass die Kupplung zwischen Kupplungselement und Backgutträger allein durch das Kupplungselement selbst hergestellt und gelöst werden kann. Dies kann bspw. durch einen Aktuator am Kupplungselement erreicht werden.

Um dieses Koppeln zu vereinfachen, weist der Backgutträger vorzugsweise wenigstens einen Kupplungsbereich zum Zusammenwirken mit dem Kupplungselement an der von der Rückwand des Backraums entfernten Seite auf. Bei dem Kupplungselement kann es sich bspw. um ein Hakenelement handeln, welches in einen, als Vertiefung im Backgutträger ausgebildeten Kupplungsbereich wahlweise zusammenwirken kann. Das Hakenelement umfasst dazu vorzugsweise einen Aktuator, mit dem das Hakenelement in die Vertiefung eingeführt oder aus dieser herausgezogen werden kann.

Es ist bevorzugt, wenn die Backgutträger wenigstens einen weiteren Kupplungsbereich zwischen der von der Rückwand des Backraums entfernten Seite und der zur Rückwand des Backraums nahen Seite aufweist. Letzterer wenigstens ein weiterer Kupplungsbereich ist vorzugsweise mittig zwischen den genannten Seiten angeordnet. Durch entsprechende weitere Kupplungsbereiche ist es möglich, einen Backgutträger in zwei oder mehreren Schritten aus einem Backraum hinauszuziehen, wobei das Kupplungselement zunächst mit dem Kupplungsbereich an der von der Rückwand des Backraums entfernten Seite zusammenwirkt, um nach dem teilweisen Herausziehen des Backgutträgers aus dem Backraum mit einem oder mehreren weiteren Kupplungsbereich(en) zusammenzuwirken. In diesem Fall ist der durch die Horizontalfördereinheit zu erreichende Förderweg kürzer, weshalb die Horizontalfördereinheit kostengünstiger ausgestaltet werden kann.

Die Beschickungsvorrichtung kann in Richtung quer zur Richtung, in der die Backgutträger aus den Backräumen gezogen werden, horizontal, vorzugsweise schienengeführt, verschiebbar sein. Dadurch ist es möglich, dass eine Beschickungsvorrichtung mit zwei oder mehr nebeneinander angeordneten Etagenöfen verwendet werden kann. Für das horizontale Verschieben der Beschickungsvorrichtung kann ein Horizontalverschiebeantrieb vorgesehen sein.

Es ist bevorzugt, wenn der Bereich des Auszugladers und der Beschickungsvorrichtung von einem Schutzgitter umgeben ist, sodass die Beschickungsvorrichtung nur an der von dem Etagenofen entfernten Seite und/oder im Bereich der Aufgabevorrichtung zugänglich ist. Ist insbesondere der Bereich des Ladertisches durch ein entsprechendes Schutzgitter geschützt, kann der Ladertisch vertikal und die Beschickungsvorrichtung horizontal jeweils ohne Sicherheitsbedenken mit erhöhter Geschwindigkeit verfahren werden.

Es ist bevorzugt, wenn das Schutzgitter im Bereich des Auszugladers zwei gegenüberliegende Türen aufweist und eine Steuerungseinheit vorgesehen ist, welche die Maximalgeschwindigkeit des Verfahrens des Ladertisches und/oder der Beschickungseinrichtung in Abhängigkeit von der Stellung der Türen vorgibt. Sind die beiden Türen geschlossen, ist eine erhöhte Geschwindigkeit möglich. Ist eine der beiden Türen geöffnet, erfolgt das vertikale Verfahren des Ladertisches und/oder das horizontale Verfahren der Beschickungsvorrichtung aus Sicherheitsgründen nur mit reduzierter Geschwindigkeit. Die Türen ermöglichen zum einen das manuelle Beladen eines auf dem Ladertisch befindlichen Backgutträger, zum anderen die Schaffung eines Durchgangs bei einem ausreichend hoch verfahrenen Ladertisch. Die reduzierte Geschwindigkeit für das vertikale Verfahren des Ladertisches kann zwischen 150 und 250 mm/s, vorzugsweise bei ca. 200 mm/s liegen. Die erhöhte Geschwindigkeit für den Ladertisch kann ca. das Dreifache der reduzierten Geschwindigkeit betragen. Ist ein Horizontalverschiebeantrieb vorgesehen, kann dessen Maximalgeschwindigkeit entsprechend an die Stellung der Türen des Schutzgitters automatisiert angepasst werden. Bei einer geöffneten Tür ist dann die Maximalgeschwindigkeit geringer als bei vollständig geschlossenen Türen.

Die Erfindung wird nun anhand vorteilhafter Ausführungsformen unter Bezugnahme auf die beigefügten Zeichnungen beispielhaft beschrieben. Es zeigen:
Figur 1: eine schematische Ansicht eines ersten Ausführungsbeispiels eines erfindungsgemäßen Etagenofens;
Figur 2a-f: Darstellung eines typischen Beschickungsvorgangs des Etagenofens gemäß Figur 1.

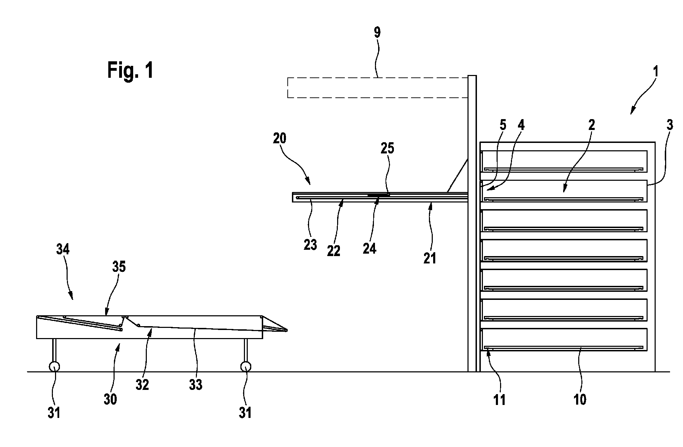

In Figur 1 ist ein erstes Ausführungsbeispiel eines erfindungsgemäßen Etagenofens 1 schematisch dargestellt.

Der Etagenofen 1 umfasst mehrere übereinander angeordnete Backräume 2. Jeder Backraum 2 hat eine geschlossene Rückwand 3 und eine gegenüber der Rückwand 3 angeordnete vordere Backraumöffnung 4. Die vordere Backraumöffnung 4 ist durch eine Backraumklappe 5 verschließbar. Jeder Backraum 2 kann individuell durch ein nicht dargestelltes Heizsystem beheizt werden, wobei die Ober- und Unterhitze für jeden Backraum 2 individuell einstellbar ist. Das Heizsystem kann bspw. ein Thermoölheizsystem sein.

In den Backräumen 2 ist jeweils ein Backgutträger 10 zur Aufnahme von Teiglingen vorgesehen. Die Backgutträger 10 lassen sich durch die Backraumöffnung 4 vollständig aus den jeweiligen Backräumen 2 herausziehen. An der von der Rückwand 3 des Backraums 2 entfernten Seite eines jeden Backgutträgers 10 ist ein Kupplungsbereich 11 vorgesehen. Der Kupplungsbereich 11 ist dabei als Vertiefung an der Unterseite des Backgutträgers 10 ausgestaltet. Der Backgutträger 10 ist an seiner zur Ablage von Teiglingen ausgebildeten Oberseite aus Stein.

Weiterhin ist ein Auszugslader 20 vorgesehen, der einen vertikal verfahrbaren Ladertisch 21 aufweist. An dem Ladertisch 21 ist eine Horizontalfördereinheit 22 vorgesehen, die zum vollständigen Herausziehen eines Backgutträgers 10 aus einem Backraum 2 des Etagenofens 1 auf den Ladertisch 21 ermöglicht. Selbstverständlich lässt sich durch die Horizontalfördereinheit 22 ein auf dem Ladertisch 21 befindlicher Backgutträger 10 auch wieder vollständig in einen Backraum 2 des Etagenofens 1 einschieben. Die Horizontalfördereinheit 22 umfasst eine Förderkette 23 mit einem daran befestigten Kupplungselement 24. Das Kupplungselement 24 ist dabei so ausgebildet, dass es beim entsprechenden Verfahren der Förderkette 23 ein einen Backraum 2 des Etagenofens 1 soweit hineinragt, dass ein an dem Kupplungselement 24 angeordneter Aktuator 25 in die Vertiefung des Kupplungsbereiches 11 wahlweise eingreifen kann.

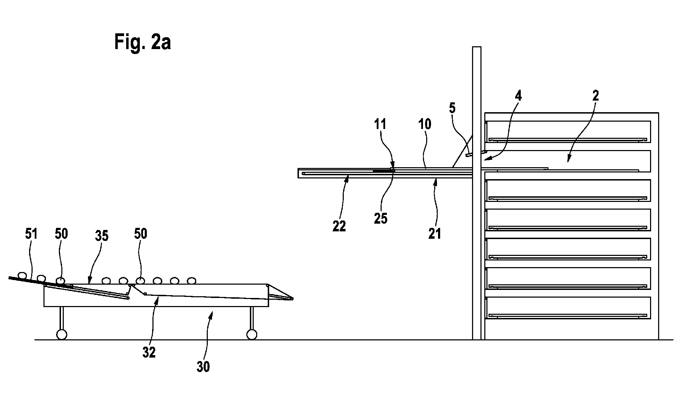

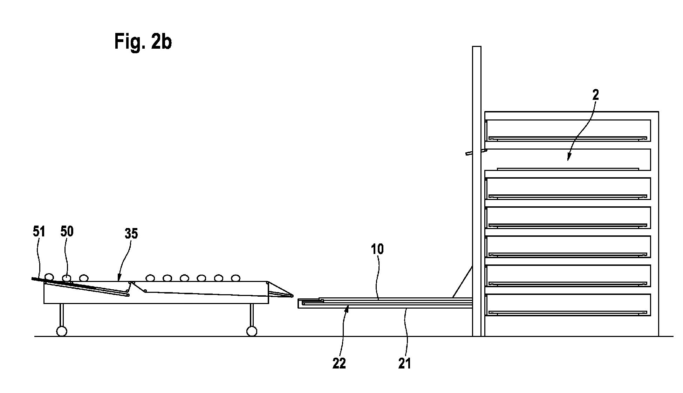

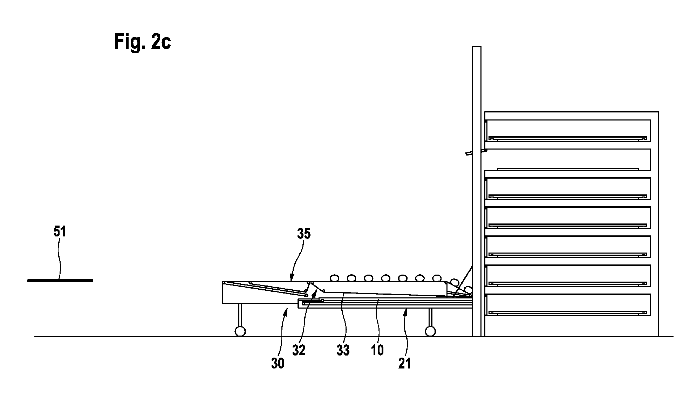

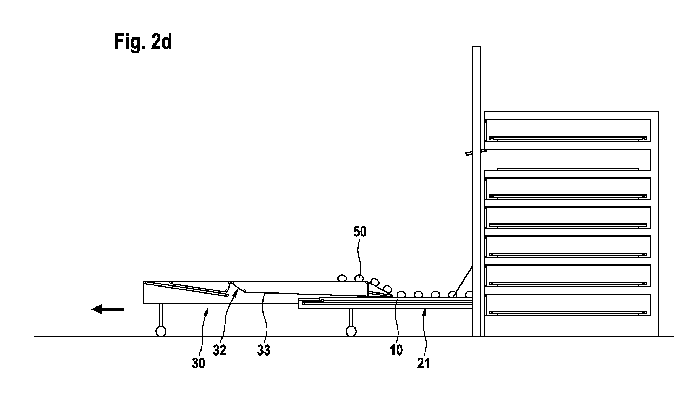

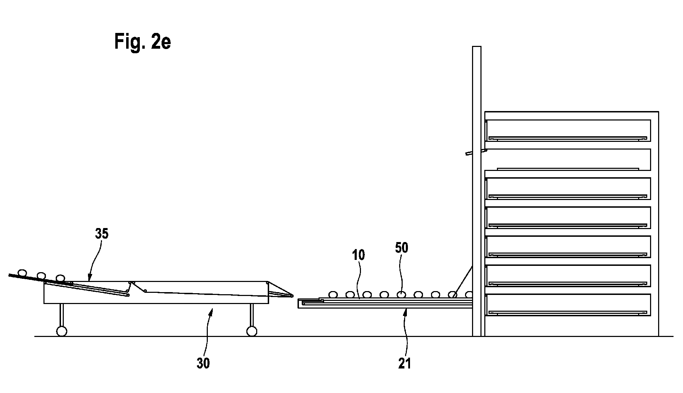

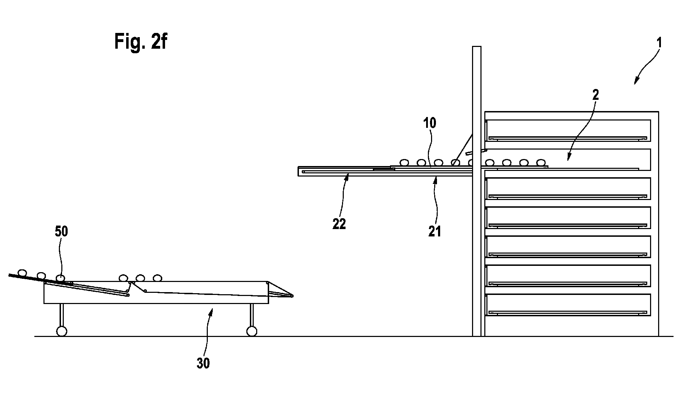

Oberhalb des Auszugladers 20 ist in Figur 2 eine Entladevorrichtung 9 angedeutet. Aus dem Stand der Technik sind entsprechende Entladevorrichtungen 9 bekannt, mit denen fertig gebackene Backwaren von einem Backgutträger 10 automatisiert entladen werden können. Dazu wird der mit Backwaren beladene Backgutträger 10 mit Hilfe des Ladertisches 21 vertikal an die Entladevorrichtung 9 herangefahren, woraufhin dann der automatisierte Entladevorgang beginnen kann.

Es ist weiterhin eine Beschickungsvorrichtung 30 vorgesehen. Die Beschickungsvorrichtung 30 ist auf Bodenrollen 31 geführt und dadurch in horizontaler Richtung verfahrbar. In der in Figur 1 gezeigten Position ist die Beschickungsvorrichtung so angeordnet, dass die vertikale Verfahrbarkeit des Ladertisches 21 von der Beschickungsvorrichtung unbeeinträchtigt ist, der Ladertisch 21 also frei vertikal verfahren werden kann. Insbesondere kann der Ladertisch 21 also aus der in Figur 1 dargestellten Position derart an der Beschickungsvorrichtung 30 vorbei verfahren werden, dass der Backgutträger 10 aus dem untersten Backraum 2 des Etagenofens 1 herausgezogen werden kann.

Die Beschickungsvorrichtung 30 umfasst eine Beladevorrichtung 32 mit einem umlaufenden Laderband 33. Das Laderband 33 ist dabei so ausgestaltet, dass darauf befindliche Teiglinge auf ein unter dem Laderband 33 bewegten Backgutträger 10 abgelegt werden können. Dabei ist das Laderband 33 ortsfest gegenüber der Beschickungsvorrichtung 30, sodass für ein horizontales Verschieben des Laderbandes 33 die Beschickungsvorrichtung 30 insgesamt verschoben werden muss.

Die Beschickungsvorrichtung 30 kann an eine zweite Position verschoben werden, in der das Laderband 33 unmittelbar über einem auf dem Ladertisch 21 befindlichen Backgutträger 10 angeordnet ist. Dazu ist zunächst der Ladertisch 21 mit einem darauf befindlichen Backgutträger 10 in eine vorgegebene vertikale Position zu verfahren und anschließend wird die Beschickungsvorrichtung 30 horizontal in Richtung des Etagenofens 1 verfahren, wobei sie den Ladertisch 21 überspannt. Die zweite Position der Beschickungsvorrichtung 30 ist bspw. in Figur 2c gezeigt, auf die später noch näher eingegangen wird.

An der von dem Etagenofen 1 entfernten Seite 34 der Beschickungsvorrichtung 30 ist weiterhin eine Aufgabevorrichtung 35 vorgesehen. Die Aufgabevorrichtung 35 ist dazu ausgebildet, Teiglinge von ihr zugeführten Paletten, Platten oder Tabletts aufzukrabbeln und an das Laderband 33 der Beladevorrichtung 32 zu übergeben.

Der Etagenofen 1 kann vollständig von einem, aus Gründen der Übersichtlichkeit nicht dargestellten Schutzgitter umgeben sein. Lediglich die Aufgabevorrichtung 35 muss von außerhalb des Schutzgitters zugänglich sein. Vorzugsweise weist das Schutzgitter im Bereich des Auszugladers 20 zwei gegenüberliegende Schiebetüren auf. Die Schiebetüren gestatten die manuelle Belegung eines auf dem Ladertisch 21 befindlichen Backgutträgers 10, bspw. mit Teiglingen, die sich nicht zur Beladung über das Laderband 33 der Beladevorrichtung 32 eignen. Die Stellung der Schiebetüren wird dabei über eine Steuerungseinheit überwacht. Die Steuerungseinheit ist dazu ausgebildet, die maximale Geschwindigkeit beim vertikalen Verfahren des Ladertisches 21 in Abhängigkeit von der Stellung der Schiebetüren vorzugeben. Sind beide Schiebetüren 41 geschlossen, beträgt die maximale Geschwindigkeit für das vertikale Verfahren des Ladertisches 21 im dargestellten Ausführungsbeispiel 600 mm/s. Ist eine der Schiebetüren geöffnet, wird diese Maximalgeschwindigkeit auf 200 mm/s festgelegt.

Befindet sich der Ladertisch 21 in der in Figur 1 dargestellten Position, kann der Bereich unterhalb des Ladertisches 21 - bspw. bei geöffneten Schiebetüren eines Schutzgitters - als Durchgang genutzt werden. Dies ist insbesondere deshalb möglich, da bei dem dargestellten Ausführungsbeispiel der Bereich zwischen Ladertisch 21 und Boden frei ist.

Der Etagenofen 1 gemäß Figur 1 wird nun anhand eines typischen Beschickungsvorgangs unter Bezugnahme auf die Figuren 2a-f näher erläutert. Dabei wurde aus Gründen der Übersichtlichkeit bei den Figuren 2a-f auf die Darstellung der Entladevorrichtung 9 verzichtet.

In Figur 2a ist die Backraumklappe 5 an der vorderen Backraumöffnung 4 desjenigen Backraums 2, der mit den Teiglingen 50 beschickt werden soll, geöffnet. Weiterhin ist der Ladertisch 21 auf eine solche vertikale Höhe verfahren und die Horizontalfördereinrichtung mit dem Backgutträger 10 durch Eingriff des Aktuators 25 in die Vertiefung des ersten Kupplungsbereichs 11 des Backgutträgers 10 gekoppelt, dass der Backgutträger 10 durch die Horizontalfördereinheit 22 auf den Ladertisch 21 gezogen wird.

Währenddessen befinden sich bereits einige Teiglinge 50 auf der Beladevorrichtung 32 der Beschickungsvorrichtung 30 bzw. werden von der Aufgabevorrichtung 35 an die Beladevorrichtung 32 durch paralleles Betreiben des Förderbandes der Aufgabevorrichtung 35 und des Laderbandes 33 übergeben. Weitere Teiglinge 50 werden der Aufgabevorrichtung 35 über ein Tablett 51 zugeführt.

In Figur 2b wird das Tablett 51 mit den weiteren Teiglingen 50 in die Aufgabevorrichtung 35 eingeschoben. Dabei werden die Teiglinge 50 von dem Förderband der Aufgabevorrichtung 35 aufgekrabbelt. Der Backgutträger 10 ist unterdessen durch die Horizontalfördereinheit 22 vollständig aus dem Backraum 2 herausgezogen und der Ladertisch 21 ist in eine vorgegebene vertikale Position verfahren.

Die Beschickungsvorrichtung 30 ist samt der Beladevorrichtung 32 und deren Laderband 33 in die dargestellte zweite Position verfahren, in der sich die Beladevorrichtung 32 nunmehr unmittelbar über dem Backgutträger 10 auf dem Ladertisch 21 befindet.

Anschließend wird die Beladevorrichtung 32 wieder zurück in ihre erste Position verfahren. Gleichzeitig wird das Laderband 33 derart betrieben, dass dessen Geschwindigkeit an die relative Geschwindigkeit der Beschickungsvorrichtung 30 gegenüber dem Ladertisch 21 angepasst ist. Dadurch werden die Teiglinge 50 von dem Laderband 33 derart auf dem Backgutträger 10 auf dem Ladertisch 21 abgelegt, dass sie beim Übergang vom Laderband 33 auf den Backgutträger 10 keine Geschwindigkeitsänderung erfahren. Dieser Vorgang ist in Figuren 2d angedeutet.

In Figur 2e befindet sich die Beladevorrichtung 32 wieder zurück in ihrer ersten Position und kann dort bereits mit neuen Teiglingen 50 über die Aufgabevorrichtung 35 bestückt werden. Der Ladertisch 21 mit dem mit Teiglingen 50 beladenen Backgutträger 10 kann von der Beschickungsvorrichtung 30 unbehindert vertikal verfahren werden.

In Figur 2f ist dargestellt, dass der mit Teiglingen 30 beladene Backgutträger 10 mit Hilfe der Horizontalfördereinrichtung 22 von dem vertikal verfahrenen Ladertisch 21 wieder in den Backraum 2 des Etagenofens 1 eingeschoben wird. Unterdessen wird die Beschickungsvorrichtung 30 weiter mit Teiglingen bestückt.

## Patentansprüche

1. Etagenofen (1) umfassend mehrere übereinander angeordnete Backräume (2) mit jeweils einem durch eine vordere Backraumöffnung (4) herausziehbaren Backgutträger (10) zur Aufnahme von Teiglingen (50) und einer gegenüber der Backraumöffnung (4) angeordneten Rückwand (2), und einen Auszugslader (20) mit einem vertikal verfahrbaren Ladertisch (21) und einer daran angeordneten Horizontalfördereinheit (22) zum vollständigen Herausziehen eines Backgutträgers (10) durch die Backraumöffnung (4) eines Backraums (2) auf den Ladertisch (21) sowie zum vollständigen Einschieben eines Backgutträgers (10) von dem Ladertisch (21) durch die Backraumöffnung (4) in einen Backraum (2),
**dadurch gekennzeichnet, dass**
eine horizontal zwischen zwei Positionen verfahrbare Beschickungsvorrichtung (30) mit einer Beladevorrichtung (32) zum Beladen eines unterhalb der Beladevorrichtung (32) angeordneten Backgutträgers (10) mit Teiglingen (50) vorgesehen ist, wobei die Beladevorrichtung (32) in der ersten Position der Beschickungsvorrichtung (30) zum Beladen eines auf dem Ladertisch (21) angeordneten Backgutträgers (10) über dem in einer vorgegebenen vertikalen Position befindlichen Ladertisch (21) des Auszugsladers angeordnet ist und in der zweiten Position der Beschickungsvorrichtung (30) die vertikale Verfahrbarkeit des Ladertisches (21) von der Beschickungsvorrichtung (30) unbeeinträchtigt ist.

2. Etagenofen nach Anspruch 1,
**dadurch gekennzeichnet, dass**
die Beschickungsvorrichtung (30) parallel zur Richtung, in der die Backgutträger (10) aus einem Backraum (2) herausgezogen werden, horizontal verfahrbar ist.

3. Etagenofen nach Anspruch 1 oder 2,
**dadurch gekennzeichnet, dass**
die Beschickungsvorrichtung (30) Bodenrollen (31) aufweist oder, vorzugsweise im Bodenbereich, schienengeführt ist.

4. Etagenofen nach einem der vorhergehenden Ansprüche,
**dadurch gekennzeichnet, dass**
die Beladevorrichtung (32) relativ zur Beschickungsvorrichtung (30) ortsfest ist.

5. Etagenofen nach einem der vorhergehenden Ansprüche,
**dadurch gekennzeichnet, dass**
die Beladevorrichtung (32) ein umlaufendes Laderband (33) umfasst, dessen Geschwindigkeit an die relative Geschwindigkeit der Beschickungsvorrichtung (30) gegenüber dem Ladertisch (21) anpassbar ist.

6. Etagenofen nach einem der vorhergehenden Ansprüche,
**dadurch gekennzeichnet, dass**
an der von dem Etagenofen (1) entfernten Seite der Beschickungsvorrichtung (30) eine Aufgabevorrichtung (35) zur Aufgabe von Teiglingen (50) auf die Beladevorrichtung (32) vorgesehen ist, die vorzugsweise ein umlaufendes Förderband zum Aufkrabbeln von Teiglingen (50) von einer Platte (51) umfasst.

7. Etagenofen nach einem der vorhergehenden Ansprüche,
**dadurch gekennzeichnet, dass**
die Horizontalfördereinheit (22) ein Kupplungselement (24) umfasst, welches zur Kupplung mit einem in einem Backraum (2) befindlichen Backgutträger (10) ausgebildet ist, wobei der Backgutträger (10) vorzugsweise wenigstens einen ersten Kupplungsbereich (11) zum Zusammenwirken mit dem Kupplungselement (24) an der von der Rückwand (3) des Backraums (2) entfernten Seite aufweist.

8. Etagenofen nach einem der vorhergehenden Ansprüche,
**dadurch gekennzeichnet, dass**
der Backgutträger (10) wenigstens einen weiteren Kupplungsbereich (12), vorzugsweise mittig, zwischen der von der Rückwand (3) des Backraums (2) entfernten Seite und der zur Rückwand (3) des Backraums (2) nahen Seite aufweist.

9. Etagenofen nach einem der vorhergehenden Ansprüche,
**dadurch gekennzeichnet, dass**
der Bereich des Ladertisches (21) und der Beschickungsvorrichtung (30) durch ein Schutzgitter (40) umgeben sind, sodass die Beschickungsvorrichtung (30) nur an der von dem Etagenofen (1) entfernten Seite und/oder im Bereich der Aufgabevorrichtung (35) zugänglich ist.

10. Etagenofen nach dem vorhergehenden Anspruch,
**dadurch gekennzeichnet, dass**
das Schutzgitter (40) im Bereich des Auszugladers (20) zwei gegenüberliegende Türen (41) aufweist und eine Steuerungseinheit vorgesehen ist, welche die Maximalgeschwindigkeit des vertikalen Verfahrens des Ladertisches (21) in Abhängigkeit von der Stellung der Türen (41) vorgibt.
